# EUROPÄISCHE PATENTSCHRIFT

(11) **EP 1 396 053 B1**
(45) Veröffentlichungstag und Bekanntmachung des Hinweises auf die Patenterteilung: **22.11.2006**
(21) Anmeldenummer: 02737783.7
(22) Anmeldetag: 11.04.2002
(51) Int. Cl.: H01R 13/66

(54) **KLEINBAUENDER KUPPLUNGSSTECKER, INSBESONDERE FÜR EINE PLANARE BREITBAND-LAMBDA-SONDE MIT INTEGRIERTER SEKUNDÄRVERRIEGELUNG**
COMPACT COUPLER PLUG, PARTICULARLY FOR A PLANAR BROADBAND LAMBDA PROBE, HAVING AN INTEGRATED SECONDARY LOCKING
FICHE DE COUPLAGE COMPACTE NOTAMMENT DESTINEE A UNE SONDE LAMBDA A BANDE LARGE PLANE AVEC VERROUILLAGE SECONDAIRE INTEGRE

(30) Priorität: 19.04.2001 DE 20106749 U
(43) Veröffentlichungstag der Anmeldung: 10.03.2004
(73) Patentinhaber: ROBERT BOSCH GMBH, 70442 Stuttgart (DE)
(72) Erfinder: PADE, Wolfgang, 75428 Illingen (DE)
(86) Internationale Anmeldenummer: PCT/DE2002/001352
(87) Internationale Veröffentlichungsnummer: WO 2002/087029

(56) Entgegenhaltungen:
- US-A- 6 132 256

## Beschreibung

Die Erfindung betrifft einen Kupplungsstecker, insbesondere für eine planare Lambda-Sonde, bestehend aus
- einem Gehäuse, nämlich einem Grundkörper und einem Deckelelement mit einer Primärverriegelung sowie
- elektrischen Bauteilen, die in das Gehäuse einlegbar und fixierbar sind, und
- einem Abgleichelement für eine Sonde, insbesondere eine planare Breitband-Lambdasonde, die in dem Kupplungsstecker oder über ein weiteres Kontaktelement ausserhalb des Kupplungssteckers anzubringen ist.

### Stand der Technik

Kupplungsstecker der vorstehenden Art sind in der Regel für die Verbindung zwischen einem Kabelbaumstecker und einer Lambda-Sonde ausgebildet, wobei die Anschlüsse, die im Kupplungsstecker vorgesehen sind, für Abgleich, Signal und/oder Heizung der Sonde vorgesehen sind. Die Lambda-Sonde und die Lambda-Regelung stellen heute in Verbindung mit dem 3-Wege-Katalysator ein wirksames Abgasreinigungsverfahren dar. Die Lambda-Sonde, die beispielsweise in ein Abgassystem eingeschraubt wird, umfasst einen Messfühler zur Feststellung des Sauerstoffgehalts im Abgas.

Der Restsauerstoffgehalt eignet sich sehr gut als Messgrösse und regelt das Luft-Kraftstoff-Verhältnis, da dieser präzise anzeigt, ob das Luft-Kraftstoff-Gemisch vollständig verbrennt.

Die Lambda-Sonde liefert dabei ein Spannungssignal, das den augenblicklichen Wert der Gemischzusammensetzung repräsentiert und den Gemischänderungen folgt. Die Kraftstoffzufuhr zum Motor wird durch eine Gemischaufbereitungsanlage entsprechen dem Signal der Lambda-Sonde derart geregelt, das ein stöchiometrisches Luft-Kraftstoff-Verhältnis λ=1 erreicht wird.
Je nach Ausführungen des Abgassystems und dem Einsatzbedingungen werden beheizte oder unbeheizte Sonden eingesetzt. Weitere Anwendungen findet die Lambda-Sonde ausserhalb von Kraftstoffahrzeugen, z. B. zur Regelung von Gasmotoren oder Öl-/Gasbrennern,

Insbesondere Breitband-Lambda-Sonden sind modular aufgebaut und erlauben in Verbindung mit der Planartechnik die Integration mehrerer Funktionen. Sie weisen in der Regel Funktionsschichten auf, die aus einer porösen Schutzschicht, aus einer Aussenelektrode, einer Sensorfolie, einer Innenelektrode, einer Referenzluftkanalfolie, einer Isolationsschicht, einem Heizelement, einer Heizfolie, einem Widerstand bzw. einem Abgleichelement und Anschlusskontakten bestehen.

Da die Breitband-Lambda-Sonden aus der Kombination einer Nernet-Konzentrationszelle (=Sensorzelle) mit einer Sauerstoff-Ionen transportierenden Pumpzelle besteht, kann sie nicht nur im stöchiometrischen Punkt bei λ=1, sondern auch im mageren und fetten Bereich sehr exakt messen.

Jede Sonde ist individuell abzugleichen. Hierzu weist die Sonde einen eingebauten Widerstand ("Mini-Hybrid") auf. Der Abgleich, der vorzugsweise mittels einem Laserstrahl erfolgt, wird dadurch ausgeführt, dass die Widerstandsschicht, die sich auf einem Keramiksubstrat befindet, entsprechend abgetragen wird, wodurch eine Widerstandsänderung herbeigeführt wird und damit ein Abgleich erfolgt.

Eine Ausführungsform besteht darin, dass die Abgleicheinheit bzw. der Widerstand unmittelbar an der Sonde angeordnet ist. Ein weiteres Ausführungsbeispiel besteht darin, dass der Widerstand ausserhalb, beispielsweise an einem mit der Sonde gekoppeltem Kabelbaumstecker untergebracht ist.

Um zu verhindern, dass Feuchtigkeit, Schmutz oder ähnliches in den Kupplungsstecker eindringt und um zu gewährleisten, dass die entsprechende Atmosphäre innerhalb des Kupplungssteckers herrscht, weist das Deckelelement zusätzliche Dichtungen auf. Ferner sind an dem Gehäuse des Kupplungssteckers Druckausgleichselemente angeordnet.

Durch die US-A-6 132 256 ist ein Kupplungsstecker, insbesondere für eine Lambda-Sonde bekannt. Dieser weist ein Gehäuse auf, das einen Grundkörper und ein Deckelelement enthält. Ferner sind in dem Kupplungsstecker elektrische Bauteile, die in das Gehäuse einlegbar und fixierbar sind und eine Sekundärverriegelung für elektrische Kontakte vorhanden. Des weiteren ist mit dem Kupplungsstecker zumindest mittelbar ein Abgleichelement für eine Lambdasonde verbunden.

Aufgabe der Erfindung ist es, den Kupplungsstecker so auszubilden, dass die Lagesicherung des Abgleichselements in fertigungstechnisch günstiger Weise erfolgt. Diese Aufgabe wird, ausgehend von einem Kupplungsstecker entsprechend den gattungsgemäßen Merkmalen des Anspruchs 1, durch die kennzeichnenden Merkmale des Anspruchs 1 gelöst. Bei dieser Anordnung dient die Sekundärverriegelung, mit der üblicherweise nur Kontaktelemente lagegesichert werden, zusätzlich als ein Fixierelement zur Lagesicherung des Abgleichselements, Dazu weist die Sekundärverriegelung als Fixierelement zusätzlich zum Deckelelement hinweisende Stützelemente auf, die mit der Innenseite des Deckelelements verbunden sind. Dadurch ergibt sich der Vorteil, dass mit dieser Doppelfunktion der Sekundärverriegelung der Kupplungsstecker vereinfacht und dadurch fertigungstechnisch günstig hergestellt werden kann.

Weitere vorteilhafte Ausgestaltungen gehen aus nachfolgenden Beschreibungen, den Ansprüchen und den Zeichnungen hervor.

Es zeigen:
- Fig. 1: eine perspektivische Ansicht auf den Kupplungsstecker, im Schnitt und mit aufgesetztem, montiertem Deckel;
- Fig. 2: einen Schnitt durch den Kabelbaumstecker gemäss Fig. 1 mit dem Deckelelement in Endstellung;
- Fig. 3: einen Schnitt durch ein weiteres Ausführungsbeispiels eines Kabelbaumsteckers gemäss Fig. 1 mit dem Deckelelement in Montagestellung;
- Fig. 4: einen Schnitt durch ein weiteres Ausführungsbeispiels eines Kabelbaumsteckers gemäss Fig. 1 mit dem Deckelelement in einer Zwischenposition, wobei die Primärverriegelung mit dem Grundkörper zusammenwirkt;
- Fig. 5: einen Schnitt durch ein weiteres Ausführungsbeispiels eines Kabelbaumsteckers gemäss Fig. 1 mit dem Deckelelement in Endstellung.

### Beschreibung eines Ausführungsbeispiels

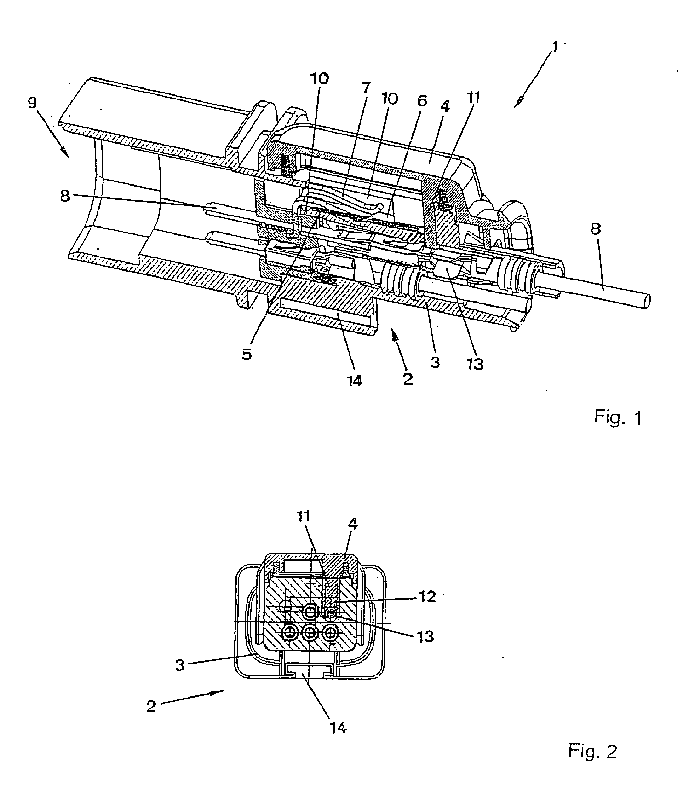

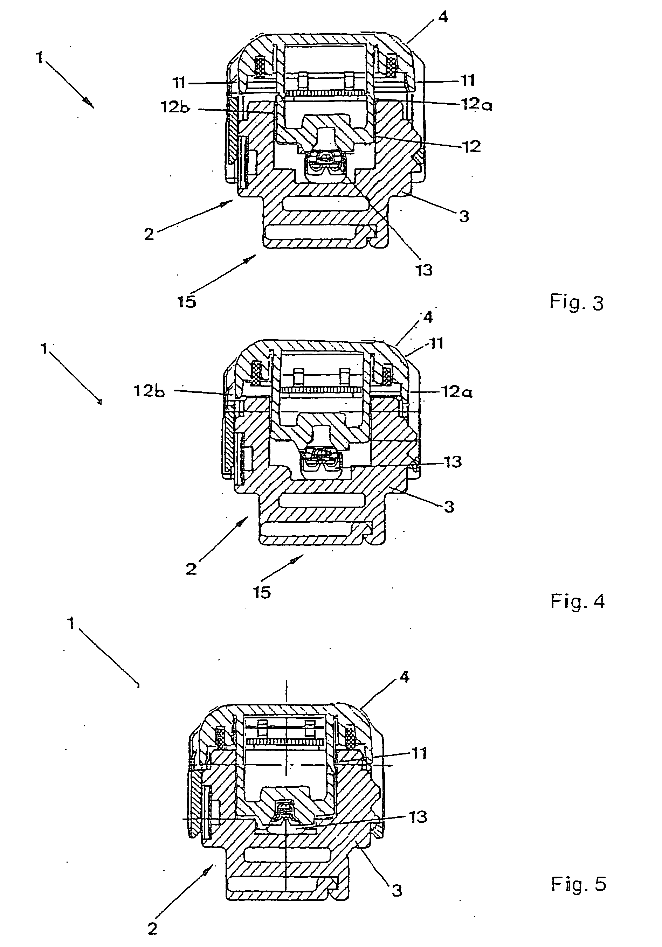

Bei dem in den Fig. 1 und 2 dargestellten Kupplungsstecker 1 sowie dem in den Fig. 3 bis 5 dargestellten weiteren Ausführungsbeispiels eines Kupplungssteckers 1 handelt es sich um einen solchen Stecker, der aus einem Gehäuse 2 besteht, dass sich aus einem Grundkörper 3 und einem Deckelelement 4 zusammensetzt.

Auf dem Grundkörper 3 ist in einer Haltevorrichtung 5 eine Abgleicheinheit 6 angeordnet, die wiederum über elektrische Kontaktelemente 7 mit der über ein Verbindungselement 8 verbundenen Lambda-Sonde bzw. mit dem über den in den Kupplungsstecker 1 eingefügten und in den Zeichnungen nicht näher dargestellten Stecker in Verbindung steht.

Die elektrischen Kontaktelemente 7 bestehen aus leiterbahnähnlich geformten Metallstreifen, die im Bereich der Kupplungsmöglichkeit 9 (Fig. 1) des Kupplungssteckers 1 mit ihrer einen Seite enden.

Die Abgleicheinheit 6 wird über Führungselemente 10, die zum grössten Teil an dem Grundkörper 3 angeordnet sind, geführt und durch die elektrische Kontaktelemente 7 positionsgerecht gehalten.

Um die seitliche Verschiebung der Abgleicheinheit 6 zu verhindern, sind senkrecht zur Längsausdehnung der Abgleicheinheit 6 Stützelemente 11 vorgesehen. Diese Stützelemente 11, wie sie insbesondere in der Fig. 2 und in den Fig. 3 bis 5 dargestellt sind, sind als Teil eines Fixierelements 12 ausgebildet.

Das Fixierelement 12 ist als Sekundärverriegelungselement vorgesehen und weist die Funktion auf, einen in dem Gehäuse 2 angeordneten elektrischen Kontakt 13, der insbesondere mit der Lambda-Sonde in Verbindung steht, positionsgerecht zu halten.

Hierzu ist das Fixierelement 12 in seinem Querschnitt vorzugsweise W-förmig ausgebildet, wobei es axial zwischen seinen beiden Schenkeln 12a/12b im montierten Zustand (Fig.3-5) den elektrischen Kontakt 13 einschliesst.

Das Sekundärverriegelungselement bzw. das Fixierelement 12 ist ferner derart ausgestaltet, dass dieses mit den Stützelementen 11 ein einstückiges Teil bildet. Zudem sind die freien Enden der Stützelemente 11 mit der Innenseite des Deckelelements 4 fest verbunden. Bei einem bevorzugten Ausführungsbeispiel bilden das Deckelelement 4 und die Stützelemente 11 zusammen mit dem Fixierelement 12 ein einstückiges Teil, wie es in den Fig. 1 bis 5 dargestellt ist.

Im noch nicht montierten und fixierten Zustand des elektrischen Kontakts 13, wie es in Fig. 3 dargestellt ist, ragen die Stützelemente 11 derart weit aus dem Gehäuse 2 heraus, dass das Deckelelement 4 nur in einer Vorverrastung fixiert werden kann.

Dies bewirkt, dass bei nicht betätigter Sekundärverriegelung und damit nicht funktionsgerechter Fixierung des elektrischen Kontaktes 13 und damit nicht regelgerechter Positionierung des Fixierelements 12 das Deckelelement 4 nicht schliesst (s. Fig. 4).

Erst durch die lagegerechte Positionierung der Sekundärverriegelung in seiner Endlage ist es möglich, dass das Deckelelement 4 seine eigene Endlage einnimmt. Diese Stellung kann sehr einfach durch Herunterdrücken des Deckelelements 4 erreicht werden.

Die einmal montierte Sekundärverriegelung ist nach deren Verriegelung nicht mehr lösbar, ohne den Kupplungsstecker 1 vollständig zu zerstören.

Vorzugsweise weist der Kupplungsstecker 1 an seinem Umfang Nuten 14 (Fig. 1 und 2) auf, die es erlauben, einen Kupplungsstecker 1 in dafür vorgesehene Halter einzufügen.

Zusätzlich sind im Grundkörper 2 Halte- und Fixierelemente 15, so wie es in den Fig. 3-5 dargestellt ist, angeordnet, die es erlauben, den Kupplungsstecker 1 an elektrischen Leitungen anzuordnen.

Hierzu ist das Halteelement 15 clipartig ausgebildet, so dass der Kupplungsstecker 1 bei geöffneter Stellung des Halteelements 15 auf einen Kabelstrang gesteckt werden kann, und mittels einer weiteren Bewegung dieses dann verschlossen werden kann.

Dadurch ist die Gelegenheit gegeben, den Kupplungsstecker beispielsweise an einen Motor (Halter) zu befestigen.

Aufgrund seiner geringen äusseren Masse ist es auch möglich, den Kupplungsstecker in einem Rillenrohr unterzubringen.

## Patentansprüche

1. Kupplungsstecker (1), insbesondere für eine planare Lambda-Sonde, bestehend aus
- einem Gehäuse (2), nämlich einem Grundkörper (3) und einem Dekkelelement (4) mit einer Primärverriegelung für das Deckelelement, sowie
- einer Sekundärverriegelung, die als Fixierelement (12) zum Fixieren mindestens eines in dem Gehäuse (2) eingelegten elektrischen Kontakts (13) vorgesehen ist und
- elektrischen Bauteilen, die in das Gehäuse einlegbar und fixierbar sind, und
- einem Abgleichelement (6) für eine Sonde, insbesondere eine planare Breitband-Lambdasonde, die in dem Kupplungsstecker (1) oder über ein weiteres Kontaktelement ausserhalb des Kupplungssteckers anzubringen ist,
**dadurch gekennzeichnet, dass**
das Deckelelement (4) die Sekundärverriegelung aufweist, und **dass** das Fixierelement (12) zusätzlich zum Deckelelement (4) hinweisende Stützelemente (11) zur Verhinderung einer seitlichen Verschiebung des Abgleichelements in Richtung seiner Längsausdehnung aufweist, wobei die Stützelemente (11) mit der Innenseite des Deckelelements verbunden sind.

2. Kupplungsstecker nach Anspruch 1, **dadurch gekennzeichnet, dass** das Fixierelement (12) und das Deckelelement (4) ein einstückiges Teil bilden.

## Claims

1. Coupler plug (1), in particular for a planar lambda probe, composed of
- a housing (2), specifically a base body (3) and a cover element (4) with a primary lock for the cover element and
- a secondary lock which is provided as a securing element (12) for securing at least one electrical contact (13) which is inserted in the housing (2), and
- electrical components which can be inserted into the housing and secured, and
- a compensation element (6) for a probe, in particular a planar broadband lambda probe which is to be mounted in the coupler plug (1) or outside the coupler plug by means of a further contact element, **characterized in that**
the cover element (4) has the secondary lock, and **in that** the securing element (12) additionally has support elements (11) which point towards the cover element (4) and have the purpose of preventing lateral shifting of the compensation element in the direction of its longitudinal extent, the support elements (11) being connected to the inside of the cover element.

2. Coupler plug according to Claim 1, **characterized in that** the securing element (12) and the cover element (4) form an integral part.

## Revendications

1. Fiche de couplage (1), en particulier pour une sonde lambda plane, comprenant :
- un boîtier (2), c'est-à-dire un corps de base (3) et un élément de couvercle (4) avec un verrouillage primaire pour l'élément de couvercle,
- un verrouillage secondaire prévu comme élément de fixation (12) pour fixer au moins un contact électrique (13) introduit dans le boîtier,
- des composants électriques qui peuvent être introduits et fixés dans le boîtier, et
- un élément d'équilibrage (6) pour une sonde, en particulier une sonde lambda à bande large plane à monter dans la fiche de couplage (1) ou par l'intermédiaire d'un autre élément de contact en dehors de la fiche de couplage,
**caractérisée en ce que**
l'élément de couvercle (4) présente le verrouillage secondaire et l'élément de fixation (12) présente en outre des éléments d'appui (11) dirigés vers l'élément de couvercle (4) pour empêcher un déplacement latéral de l'élément d'équilibrage dans la direction de son extension longitudinale, les éléments d'appui (11) étant reliés à la face intérieure de l'élément de couvercle.

2. Fiche de couplage selon la revendication 1,
**caractérisée en ce que**
l'élément de fixation (12) et l'élément de couvercle (4) forme une seule pièce.
